# EUROPÄISCHE PATENTSCHRIFT

(11) **EP 2 993 084 B1**
(45) Veröffentlichungstag und Bekanntmachung des Hinweises auf die Patenterteilung: **01.11.2023**
(21) Anmeldenummer: 14183140.4
(22) Anmeldetag: 02.09.2014
(51) Int. Cl.: B60Q 3/30

(54) **Nutzfahrzeugaufbau mit einer Leuchteinheit zur Beleuchtung eines Laderaums**
Structure of commercial vehicle with a lighting unit for illuminating a storage area
Châssis d'un véhicule utilitaire doté d'une unité d'éclairage pour un espace de chargement

(43) Veröffentlichungstag der Anmeldung: 09.03.2016
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- EP-A1- 2 595 260
- WO-A1-00/71386
- JP-U- 3 172 881
- US-A- 6 152 586
- US-A1- 2007 206 386

## Beschreibung

Die Erfindung betrifft einen Aufbau, insbesondere einen Kofferaufbau, eines Nutzfahrzeugs, vorzugsweise eines Lastkraftwagens, Anhängers oder Sattelaufliegers, mit einem darin angeordneten Laderaum und wenigstens einer Leuchteinheit zur Beleuchtung des Laderaums.

Unter Nutzfahrzeugen der genannten Art werden insbesondere solche verstanden, die zum Transport von Gütern im öffentlichen Straßenverkehr vorgesehen sind. Die Nutzfahrzeuge können selbst motorisch angetrieben sein, wie dies beispielsweise bei Lastkraftwagen der Fall ist. Die Nutzfahrzeuge können aber auch von motorisierten Zugmaschinen gezogen werden, und zwar beispielsweise als Anhänger oder als Sattelauflieger.

Zudem weisen die Nutzfahrzeuge unterschiedliche Aufbauten auf, die einen Laderaum einschließen. Bei Planenaufbauten wird wenigstens eine Seitenwand durch eine sogenannte Seitenwandplane verschlossen. Diese kann an einem Längsholm des Dachs verschiebbar gehalten sein, so dass die Plane zur Rückseite oder zur Vorderseite des Planenaufbaus verschiebbar ist. In diesem Fall wird der Aufbau auch als Curtainsider-Aufbau bezeichnet. Bei Kofferaufbauten bestehen die Seitenwände, die Stirnwand und das Dach aus festen Wänden oder Paneelen. Die Paneele umfassen typischerweise zwei äußere strukturgebende Decklagen, die bedarfsweise jeweils mehrlagig aufgebaut sein können, und eine dazwischen vorgesehene Kernlage. Die Rückseite der Kofferaufbauten ist mit Flügeltüren, Rolltoren oder dergleichen verschlossen. Daher werden Kofferaufbauten bevorzugt zum Trockentransport von feuchtigkeitsempfindlichen Gütern verwendet. Die Kernlage wird in der Regel aus einem thermisch gut isolierenden, geschäumten Kunststoff wie etwa Polyurethan gebildet, weshalb Kofferaufbauten auch zum Transport von temperaturempfindlichen Gütern verwendet werden.

Da der Laderaum von Kofferaufbauten durch massive Wände umschlossen ist und meist nur die Rückseiten der Kofferaufbauten geöffnet werden können, ist in vielen Fällen eine Beleuchtung des Laderaums erforderlich. Zu diesem Zweck sind bereits Aufbauten vorgeschlagen worden, bei denen Leuchteinheiten an der Unterseite der an den Laderaum grenzenden Decke befestigt sind. Dabei hat sich jedoch gezeigt, dass die Leuchteinheiten leicht beschädigt werden können. So kommt es teilweise vor, dass beim Be- und Entladen die Ladung oder die Transportmittel gegen die Leuchteinheiten stoßen. Außerdem kann es bei der Reinigung der Aufbauten mit Hochdruckreinigern zu einer Beschädigung der Leuchteinheiten kommen. Um diese Nachteile zu vermeiden, sind Aufbauten vorgeschlagen worden, bei denen separate punktförmige Leuchtmittel an verschiedenen Stellen des Laderaums in das Dachpaneel des Aufbaus integriert sind. Die Leuchteinheiten werden dann nicht so leicht beschädigt, müssen aber aufwendig im Dachpaneel montiert und verkabelt werden. Die US 2007/206386 A1 offenbart einen Aufbau eines Nutzfahrzeugs mit einem darin angeordneten Laderaum und wenigstens einer Leuchteinheit zur Beleuchtung des Laderaums, wobei die Leuchteinheit länglich, ausgebildet ist und wenigstens teilweise derart in wenigstens einer Aufnahme eines den Laderaum begrenzenden Aufnahmebauteils aufgenommen ist, dass der in der Aufnahme aufgenommene Teil der Leuchteinheit nicht gegenüber dem Aufnahmebauteil in den Laderaum vorsteht, wobei die wenigstens eine Leuchteinheit in wenigstens einem Zwischenstück montiert ist, wobei das Zwischenstück zusammen mit der Leuchteinheit wenigstens teilweise in der Aufnahme des Aufnahmebauteils aufgenommen ist, wobei das wenigstens eine Zwischenstück im Aufnahmebauteil durch eine Klebeverbindung gehalten ist und wobei das wenigstens eine Aufnahmebauteil ein Dachpaneel mit einer an den Laderaum grenzenden inneren Decklage ist. Das Zwischenstück ist auf der dem Laderaum abgewandten Seite der inneren Decklage des Dachpaneels angeordnet.

JP3172881 U offenbart einen Aufbau eines Nutzfahrzeugs mit einem darin angeordneten Laderaum und wenigstens einer Leuchteinheit zur Beleuchtung des Laderaums, wobei die Leuchteinheit länglich ausgebildet ist und wenigstens teilweise derart in wenigstens einer Aufnahme eines den Laderaum begrenzenden Aufnahmebauteils aufgenommen ist, dass der in der Aufnahme aufgenommene Teil der Leuchteinheit nicht gegenüber dem Aufnahmebauteil in den Laderaum vorsteht, wobei die wenigstens eine Leuchteinheit in wenigstens einem Zwischenstück montiert ist, wobei das Zwischenstück zusammen mit der Leuchteinheit wenigstens teilweise in der Aufnahme des Aufnahmebauteils aufgenommen ist, wobei das wenigstens eine Zwischenstück am Aufnahmebauteil durch eine Schraubverbindung gehalten ist, wobei das wenigstens eine Aufnahmebauteil ein Profil ist, und wobei das Zwischenstück auf der dem Laderaum zugewandten Seite der inneren Decklage des Dachpaneels angeordnet ist.

Der Erfindung liegt daher die Aufgabe zugrunde, den eingangs genannten und zuvor näher beschriebenen Aufbau derart auszugestalten und weiterzubilden, dass eine einfachere Montage bei gleichzeitig guter Ausleuchtung des Laderaums erreicht werden kann.

Diese Aufgabe ist mit einem Aufbau nach dem Anspruch 1 gelöst.

Die Verwendung einer länglichen Leuchteinheit, die wenigstens teilweise in einer Aufnahme eines den Laderaum begrenzenden Aufnahmebauteils aufgenommen wird, erlaubt eine einfache und schnelle Montage, die insbesondere geringe Montagekosten nach sich zieht. Eine Verkabelung von Leuchteinheiten innerhalb beispielsweise des Dachpaneels oder eines Seitenwandpaneels ist dann nicht oder nur in einem weitaus geringeren Umfang erforderlich.

Dabei erfolgt die Montage der Leuchteinheit jedoch nicht ohne Weiteres auf der Innenseite des entsprechenden Paneels, sondern wenigstens teilweise in einer Aufnahme wenigstens eines Bauteils des Kofferaufbaus, nämlich eines Aufnahmebauteils. Auf diese Weise kann eine einfache Montage der Leuchteinheit gewährleistet und die Leuchteinheit gleichzeitig vor Beschädigungen geschützt werden. Dies gilt insbesondere auch deshalb, weil die Leuchteinheit wenigstens teilweise, insbesondere vollständig, in der Aufnahme aufgenommen ist. Die Leuchteinheit ragt dann nicht gegenüber der Aufnahme nach innen in den Laderaum des Kofferaufbaus vor. Besonders bevorzugt ist es dabei, wenn die Leuchteinheit nicht gegenüber den an die gegenüberliegenden Seiten, insbesondere Längsseiten der Leuchteinheit angrenzenden Bereiche des Aufnahmebauteils nach innen in den Laderaum vorsteht. Dann ist die Leuchteinheit gegenüber Einwirkungen von außen recht gut geschützt.

Die Leuchteinheit ist vorzugsweise überwiegend, insbesondere im Wesentlichen über die gesamte Länge der Leuchteinheit in der Aufnahme des Aufnahmebauteils aufgenommen. Dies kann auch den Anschlussbereich der Leuchteinheit an die Spannungsversorgung umfassen. Erforderlich ist dies aber nicht. Auch kann die Leuchteinheit aus anderen Gründen an einzelnen Stellen gegenüber der Aufnahme in den Laderaum vorstehen. Dies ist zwar nicht bevorzugt, das beschriebene vollständige Einbringen der Leuchteinheit in die Aufnahme an anderen Stellen führt aber dennoch zu den zuvor beschriebenen Vorteilen.

Grundsätzlich bevorzugt ist es, wenn die Form der Aufnahme in etwa mit der Form der Leuchteinheit korrespondiert. Dabei ist es besonders bevorzugt, wenn die Breite der Aufnahme wenigstens etwa der Breite der Leuchteinheit entspricht. Dann ist die Leuchteinheit nämlich nicht oder kaum von der Seite her zugänglich, so dass Beschädigungen weniger wahrscheinlich sind und der Arbeitsaufwand zur Bereitstellung von übermäßig breiten Aufnahmen eingespart werden kann.

Die Tiefe der Aufnahme kann dabei etwas größer sein als die Dicke der Leuchteinheit. Um den Fertigungsaufwand und den Konstruktionsaufwand gering zu halten, muss die Leuchteinheit jedoch nicht sehr weit in der Aufnahme versenkt sein, was ebenfalls der Ausleuchtung des Laderaums dienen kann.

Um eine vollständige Aufnahme der Leuchteinheit in der Aufnahme des Aufnahmebauteils zu gewährleisten, können die an die Leuchteinheit angrenzenden Bereiche oder die seitlichen Flanken der Aufnahme weiter in Richtung des Laderaums ragen als die Leuchteinheit, die dann nicht gegenüber der Aufnahme hervorsteht. Die Leuchteinheit ist also beispielsweise maximal fluchtend zum Aufnahmebauteil ausgerichtet. Weiter bevorzugt kann es, beispielsweise zur Vermeidung von Spalten sein, wenn die Aufnahme korrespondierend zur Leuchteinheit ausgebildet ist. Dann kann die Leuchteinheit bedarfsweise bündige in der Aufnahme bez. im Aufnahmebauteil aufgenommen sein.

Im Falle von mehreren Leuchteinheiten können diese in unterschiedlichen Aufnahmen ein und desselben Aufnahmebauteils aufgenommen sein. Es kann aber jede Leuchteinheit auch in einem eigenen Aufnahmebauteil aufgenommen sein. Die hier bevorzugte Ausgestaltung richtet sich grundsätzlich nach der Art und Anordnung des Aufnahmebauteils. Unabhängig davon ist es zum Zwecke einer gleichmäßigen Ausleuchtung und einfacheren Fertigung des Aufbaus bevorzugt, wenn die Leuchteinheiten wenigstens im Wesentlichen parallel zueinander und zudem vorzugsweise in Längsrichtung des Aufbaus verlaufen.

Bei einer ersten bevorzugten Ausgestaltung des Aufbaus weist die wenigstens eine Leuchteinheit über ihre Länge mehrere Leuchtmittel auf. Dies führt zu einer besseren Ausleuchtung des Laderaums und einer einfacheren Montage, da weitere Leuchtmittel eingespart werden können. Vor diesem Hintergrund ist es besonders bevorzugt, wenn die Leuchteinheit eine Vielzahl von Leuchtmitteln umfasst. Unabhängig von der Anzahl der Leuchtmittel sind die Leuchtmittel vorzugsweise in Form von LEDs vorgesehen. Diese können sehr platzsparend angeordnet werden und erlauben dennoch eine gute Ausleuchtung des Laderaums.

Die wenigstens eine Leuchteinheit kann besonders einfach und schnell ausgetauscht oder repariert werden, wenn die Leuchteinheit vom Laderaum zugänglich ist. Außerdem können dann zusätzliche Abdeckungen und/oder Montageschritte eingespart werden.

Damit auch im beladenen Zustand des Kofferaufbaus eine gute Ausleuchtung des Laderaums erreicht werden kann, bietet es sich an, die wenigstens eine Leuchteinheit recht weit oben im Kofferaufbau anzubringen. Daher kann das wenigstens eine Aufnahmebauteil ein Dachpaneel und/oder ein Seitenwandpaneel sein. Die Aufnahme kann dann direkt in das Dachpaneel und/oder das Seitenwandpaneel eingebracht sein, so dass gegebenenfalls ergänzende Bauteile entbehrlich sind. Dabei ist es dann besonders bevorzugt, wenn die Aufnahme in einer an den Laderaum grenzenden inneren Decklage des entsprechenden Paneels vorgesehen ist.

Die Aufnahme kann der einfachen Herstellung halber alternativ oder zusätzlich beispielsweise als eine Vertiefung und/oder Sicke des Dachpaneels und/oder des wenigstens einen Seitenwandpaneels ausgebildet sein. Dabei bietet es sich bei einem Mehrschichtaufbau des Dachpaneels und/oder des wenigstens einen Seitenwandpaneels an, wenn die Vertiefung und/oder Sicke in eine innere, dem Laderaum zugeordnete Deckschicht eingebracht ist. Die Decklage kann dabei an eine Kernschicht des Paneels angrenzen, die aus einem geschäumten Kunststoff, insbesondere Polyurethan, gebildet sein kann.

Alternativ oder zusätzlich kann das wenigstens eine Aufnahmebauteil auch als ein Profil ausgebildet sein, das ergänzend zum eigentlichen Dachpaneel und/oder Seitenwandpaneel vorgesehen ist. Das Profil kann dabei einzig der Aufnahme der Leuchteinheit dienen. Das Profil kann aber auch einem anderen Zweck dienen und zusätzlich der Einfachheit halber die Leuchteinheit aufnehmen, um beispielsweise Synergien zu schaffen. Um eine gute Ausleuchtung des Laderaums zu erreichen, kann das Profil vorzugsweise im Deckenbereich des Kofferaufbaus bzw. des Laderaums vorgesehen sein. Zudem kann es der einfacheren Ausleuchtung und Montage wegen zweckmäßig sein, wenn das Profil in Längserstreckung des Kofferaufbaus ausgerichtet ist.

Um Synergien zu nutzen, kann das wenigstens eine Profil das Dachpaneel und ein Seitenwandpaneel miteinander verbinden und damit beispielsweise der Abdichtung und/oder der Aussteifung des Kofferaufbaus in diesem Bereich dienen. Vor diesem Hintergrund ist das Profil vorzugsweise als Winkelprofil ausgebildet. Die Winkelform des Profils kann bei geeigneter Materialwahl oder Oberflächenbeschaffenheit das von der Leuchteinheit abgestrahlte Licht reflektieren und so zu einer besseren Ausleuchtung des Laderaums beitragen.

Die wenigstens eine Leuchteinheit ist nicht direkt im Aufnahmebauteil montiert. Vielmehr ist die wenigstens eine Leuchteinheit in wenigstens einem Zwischenstück montiert. Das Zwischenstück ist zusammen mit der Leuchteinheit wenigstens teilweise in der Aufnahme des Aufnahmebauteils aufgenommen sein. Durch die Verwendung des Zwischenstücks kann beispielsweise die Montage vereinfacht werden, etwa indem im Wege der Vorkonfektionierung die Leuchteinheit am Zwischenstück angebracht wird. Das Zwischenstück lässt sich etwa wegen seiner Größe, Steifigkeit oder dergleichen besser am Aufnahmebauteil montieren als die Leuchteinheit alleine. So kann die Herstellung des Aufbaus vereinfacht und beschleunigt werden.

Dabei bietet es sich aus den bereits genannten Gründen weiter an, wenn das wenigstens eine Zwischenstück derart in der Aufnahme des wenigstens einen Aufnahmebauteils aufgenommen ist, dass das Zwischenstück nicht gegenüber dem Aufnahmebauteil, insbesondere den an gegenüberliegenden Seiten des Zwischenstücks vorgesehenen Bereichen des Aufnahmebauteils, in den Laderaum vorsteht. Das Zwischenstück ist dann besser gegenüber Beschädigungen geschützt und wird so dauerhaft zuverlässig im Aufnahmebauteil gehalten.

Alternativ oder zusätzlich kann die wenigstens eine Leuchteinheit derart in der Aufnahme des wenigstens einen Zwischenstücks aufgenommen sein, dass die Leuchteinheit nicht gegenüber der Aufnahme des Zwischenstücks in den Laderaum vorsteht. Dann ist die Leuchteinheit wie zuvor bereits erläutert gut gegen störende Einwirkungen von außen geschützt, so dass Beschädigungen vermieden werden und die Leuchteinheit eine lange Lebensdauer erreichen kann. Dabei ist die Leuchteinheit besonders gut geschützt, wenn die Leuchteinheit nicht gegenüber den an gegenüberliegenden Seiten, insbesondere den Längsseiten der Leuchteinheit angrenzenden Bereichen des Zwischenstücks, in den Laderaum des Kofferaufbaus vorsteht.

Der einfacheren Montage und der Reparaturfreundlichkeit des Kofferaufbaus wegen kann das wenigstens eine Zwischenstück zu der wenigstens einen Aufnahme für die wenigstens eine Leuchteinheit noch wenigstens eine weitere Aufnahme aufweisen. Diese Aufnahme kann beispielsweise der Aufnahme eines Kabels zur elektrischen Spannungsversorgung eines Verbrauchers und/oder einer Leitung zum Transport eines Fluids dienen, beispielsweise jeweils etwa zum Betrieb eines Deckenverdampfers oder einer anderen Einrichtung. Dabei kann auch das Kabel und/oder die Leitung im Wege der Vorkonfektionierung in das Zwischenstück eingebracht werden, so dass bei der endgültigen Montage des Kofferaufbaus nur noch das Zwischenstück inklusive Leuchteinheit, Kabel und/oder Leitung am Aufnahmebauteil festgelegt werden muss.

Zum Zwecke einer einfachen und schnellen Montage bietet es sich insbesondere an, wenn die wenigstens eine Leuchteinheit durch eine Rastverbindung und/oder eine Klebeverbindung festgelegt ist. Eine Rastverbindung erlaubt dabei eine besonders schnelle Verbindung, während eine Klebeverbindung ebenfalls schnell geschaffen werden kann und zugleich meist recht lange hält. Vor diesem Hintergrund kann eine kombinierte Rast/Klebe-Verbindung besonders bevorzugt sein. Dabei kann die entsprechende Verbindung sowohl zur Montage im Zwischenstück als auch im Aufnahmebauteil genutzt werden.

Das wenigstens eine Zwischenstück ist im Aufnahmebauteil wenigstens teilweise durch eine Rastverbindung und/oder Klebeverbindung gehalten. Dabei werden die zuvor bereits erläuterten Vorteile analog erreicht.

Um eine geeignete Ausleuchtung des Laderaums sicherzustellen ist die wenigstens eine Leuchteinheit und/oder das wenigstens eine Zwischenstück am Dachpaneel und/oder wenigstens einem Seitenwandpaneel vorgesehen. Auf diese Weise wird die Ausleuchtung des Laderaums auch durch darin aufgenommene Ladung verhältnismäßig wenig beeinträchtigt. Aus diesem Grund ist im Falle eines Seitenwandpaneels eine deckennahe Anbringung der Leuchteinheit und/oder des wenigstens einen Zwischenstücks besonders zweckmäßig.

Um die Montage zu vereinfachen, den Laderaum nicht unnötig zu beeinträchtigen oder eine bessere Ausleuchtung des Laderaums zu gewährleisten, kann die wenigstens eine Leuchteinheit und/oder das wenigstens eine Zwischenstück in einem durch die Verbindung von wenigstens einem Seitenwandpaneel und dem Dachpaneel gebildeten Eckbereich vorgesehen sein. Die Montage im Eckbereich des Kofferaufbaus kann auch der festeren und langlebigeren Festlegung der Leuchteinheit und/oder des Zwischenstücks dienen.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem nicht erfindungsgemäßen Aufbau in einer perspektivischen Darstellung,
- Fig. 2: ein Detail eines Dachpaneels des Aufbaus aus Fig. 1 mit einer Leuchteinheit in einer perspektivischen Querschnittsansicht,
- Fig. 3: ein Detail eines Eckbereichs eines zweiten nicht erfindungsgemäßen Aufbaus mit einer Leuchteinheit in einem vertikalen Schnitt,
- Fig. 4: ein Detail eines Eckbereichs eines dritten nicht erfindungsgemäßen Aufbaus mit einer Leuchteinheit in einem vertikalen Schnitt,
- Fig. 5: ein Detail eines Eckbereichs eines vierten erfindungsgemäßen Aufbaus mit einer Leuchteinheit in einem vertikalen Schnitt,
- Fig. 6: ein Detail eines Eckbereichs eines fünften erfindungsgemäßen Aufbaus mit einer Leuchteinheit in einem vertikalen Schnitt und
- Fig. 7: ein Detail eines Eckbereichs eines sechsten erfindungsgemäßen Aufbaus mit einer Leuchteinheit in einem vertikalen Schnitt.

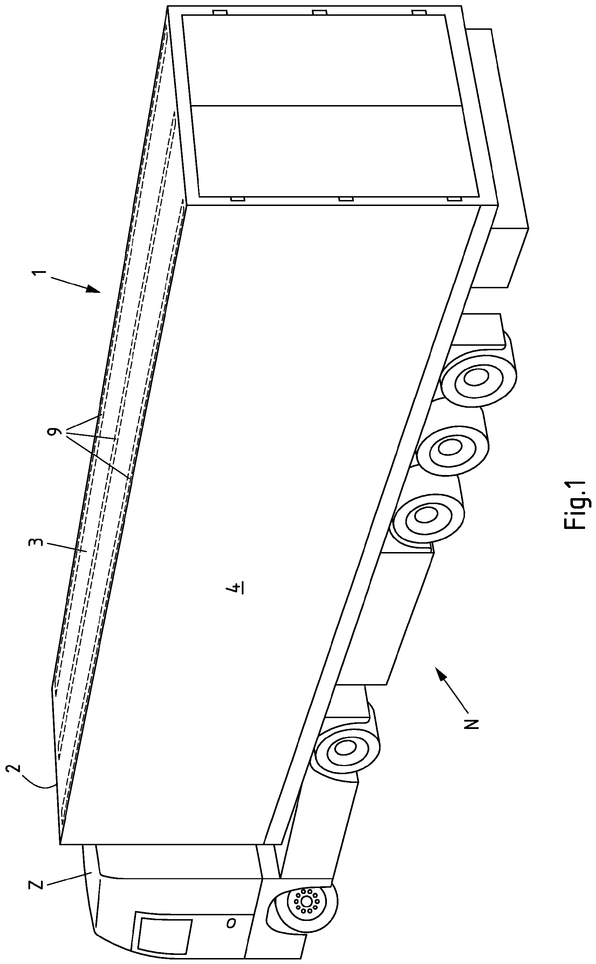

In der Fig. 1 ist ein Nutzfahrzeug N in Form eines Sattelaufliegers mit einem Aufbau 1 in Form eines Kofferaufbaus dargestellt. Das Nutzfahrzeug N wird von einem Zugfahrzeug Z gezogen. An der Stirnwand, den Seitenwänden und dem Dach des Aufbaus 1 sind ein Stirnwandpaneel 2, ein Dachpaneel 3 und Seitenwandpaneele 4 vorgesehen, wobei die Paneele 2,3,4 eine strukturgebende innere Decklage 5,6, eine strukturgebende äußere Decklage und eine dazwischen vorgesehene Kernschicht aus einem geschäumten Kunststoff, wie beispielsweise Polyurethan aufweisen. Die Decklagen 5, von denen die inneren Decklagen 5 dem im Aufbau 1 eingeschlossenen Laderaum 7 zugewandt sind, sind mehrlagig aufgebaut und umfassen beispielsweise neben einer Lackschicht oder Folienschicht eine metallische Schicht und/oder eine Kunststoffschicht, die jede für sich oder gemeinsam für eine ausreichende Biegesteifigkeit der Decklage 5 sorgen. Die Kunststoffschicht kann zu diesem Zweck als faserverstärkte Kunststoffschicht ausgebildet sein.

In Längsrichtung des Aufbaus 1 verlaufen den Laderaum 7 ausleuchtende Leuchteinheiten 8, die dementsprechend überwiegend länglich ausgebildet sind. Die dargestellten und insoweit bevorzugten Leuchteinheiten 8 sind geradlinig ausgebildet. Bedarfsweise kann aber auch, insbesondere abschnittsweise von einer geradlinigen Ausbildung abgewichen werden, ohne dass dies zu nicht tolerierbaren Nachteilen führen würde. Zudem weisen die dargestellten und insoweit bevorzugten Leuchteinheiten 8 eine bandförmige Gestalt auf. Die Leuchteinheiten sind daher anders ausgedrückt breiter als dick, so dass die Leuchteinheiten einfach und platzsparend verbaut werden können.

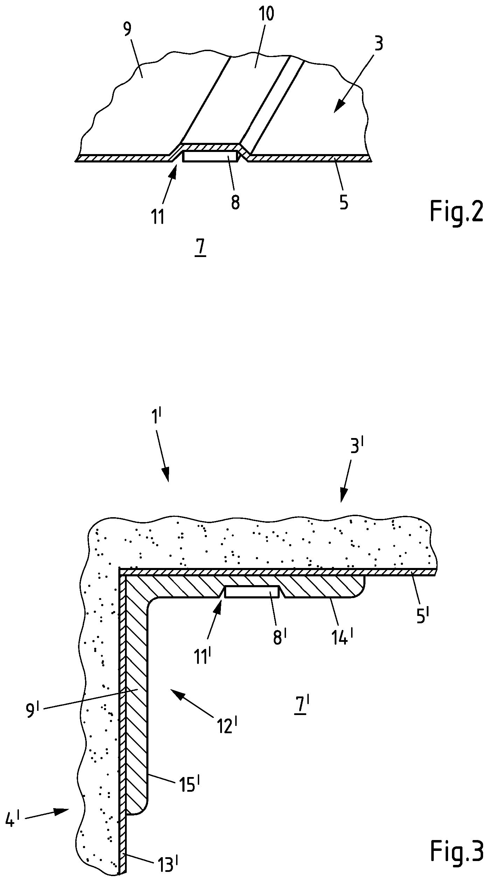

In der Fig. 2 ist eine Leuchteinheit 8 im Querschnitt dargestellt, und zwar zusammen mit einem Detail des Dachpaneels 3, das bei diesem Aufbau 1 ein Aufnahmebauteil 9 für die Leuchteinheit 8 bildet. Von diesem Aufnahmebauteil 9 ist der besseren Anschaulichkeit halber lediglich die innere Decklage 5 dargestellt. Die innere Decklage 5, die nach oben an die nicht dargestellte Kernschicht angrenzt, weist eine in Längsrichtung des Dachpaneels 3 laufende Sicke 10 auf. Diese Sicke 11 bildet eine Aufnahme 11 für die Leuchteinheit 8, die zur Gänze in dieser Sicke 11 aufgenommen ist. Wird an die innere Decklage 5 des Aufnahmebauteils 9 von unten eine Ebene angelegt, so steht die Leuchteinheit 8 nicht gegenüber dieser Ebene in den Laderaum 7 vor. Vielmehr verbleibt beim dargestellten und insoweit bevorzugten Aufbau 1 ein geringer Abstand zwischen der Leuchteinheit 8 und der beschriebenen Ebene. Es besteht daher nur geringe Gefahr, dass die Leuchteinheit 8 beim Be- und Entladen des Aufbaus 1 oder beim Säubern des Laderaums 7 mit einem Hochdruckreiniger beschädigt wird. Dazu trägt auch bei, dass die an die Aufnahme 11 grenzenden Bereiche des Aufnahmebauteils 9 zu beiden Längsseiten der Leuchteinheit 8 ebenfalls weiter in Richtung des Laderaums 7 ragen als die Leuchteinheit 8 selbst. Zudem ist die Leuchteinheit 8 vom Laderaum 7 zugänglich und kann daher leicht ausgetauscht oder repariert werden. Die Leuchtmittel der Leuchteinheit 8 sind eine Vielzahl LEDs, so dass die Leuchteinheit 8 als Bandmaterial bereitgestellt und beispielsweise in der Sicke 10 verklebt werden kann.

In der Fig. 3 ist ein anderes Detail eines anderen Aufbaus 1^{I} dargestellt, bei dem ein zusätzliches Winkelprofil 12^{I} das Aufnahmebauteil 9^{I} bildet und eine Aufnahme 11^{I} für die Leuchteinheit 8^{I} bereitstellt. Das Winkelprofil 12^{I} ist beim dargestellten Aufbau 1^{I} aus Metall, insbesondere Aluminium, gefertigt, könnte alternativ aber auch aus einem Kunststoff gebildet sein. Das Winkelprofil 12^{I} verbindet das Dachpaneel 3^{I} mit einem Seitenwandpaneel 4^{I}, genauer gesagt deren innere Decklagen 5^{I},13^{I}. Das Winkelprofil 12^{I} ist folglich im Eckbereich zwischen dem Dachpaneel 3^{I} und dem Seitenwandpaneel 4^{I} vorgesehen und steift diesen Eckbereich aus. Das Winkelprofil 12^{I} verläuft in Längsrichtung des Aufbaus 1^{I} und weist an dem dem Dachpaneel 3^{I} zugeordneten Schenkel 14^{I} eine Aufnahme 11^{I} zur Aufnahme einer Leuchteinheit 8^{I} auf, die grundsätzlich alternativ oder zusätzlich auch an dem dem Seitenwandpaneel 4^{I} zugeordneten Schenkel 15^{I} des Winkelprofils 12^{I} vorgesehen sein könnte. Das Winkelprofil 12^{I} ist insoweit das Aufnahmebauteil 9^{I} zur Aufnahme der Leuchteinheit 8^{I}. Die Leuchteinheit 8^{I} steht dabei nicht gegenüber dem dem Dachpaneel 3^{I} zugeordneten Schenkel 14^{I}, insbesondere nicht gegenüber den zu beiden Längsseiten der Leuchteinheit 8^{I} angrenzenden Abschnitten des dem Dachpaneel 3^{I} zugeordneten Schenkel 14^{I}, in Richtung des Laderaums 7^{I} vor. Dennoch ist die Leuchteinheit 8^{I} vom Laderaum 7^{I} aus zugänglich. Die Leuchteinheit 8^{I} ist beim dargestellten Aufbau 1^{I} im Wege der Vorkonfektionierung in die längliche Aufnahme 11^{I} des Aufnahmebauteils 9^{I} eingeklebt worden, so dass die Montage des Aufnahmebauteils 9^{I} im Eckbereich des Aufbaus 1^{I} mit bereits vormontierter Leuchteinheit 8^{I} erfolgt ist. Auch bei dieser Leuchteinheit 8^{I} ist eine Vielzahl Leuchtmittel in Form von LEDs verbaut.

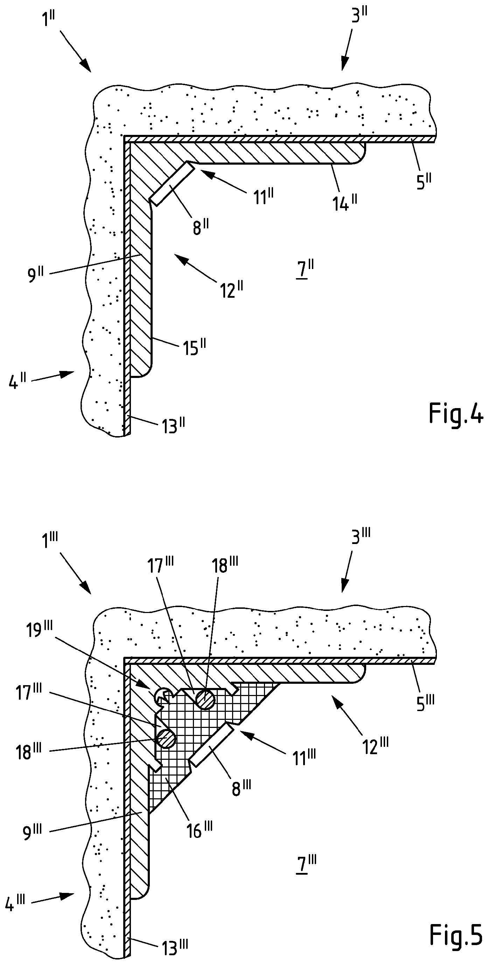

In der Fig. 4 ist ein Detail eines alternativen Aufbaus 1^{II} in Form eines Kofferaufbaus dargestellt, bei dem ebenfalls eine innere Decklage 5^{II} eines Dachpaneels 3^{II} mit einer inneren Decklage 13^{II} eines Seitenwandpaneels 4^{II} mit einem Winkelprofil 12^{II} verbunden ist. Das Winkelprofil 12^{II} erstreckt sich dabei in Längsrichtung des Aufbaus 1^{II} und weist im Eckbereich zwischen den beiden den Paneelen 3^{II},4^{II} zugeordneten Schenkeln 14^{II},15^{II} eine Aufnahme 11^{II} zur Aufnahme einer Leuchteinheit 8^{II} auf. Das Winkelprofil 12 ist insoweit das Aufnahmebauteil 9^{II}, das der Aufnahme und Montage der Leuchteinheit 8^{II} dient. Die Leuchteinheit 8^{II} ist dabei entlang der Aufnahme 11^{II} mit dem Aufnahmebauteil 9^{II} verklebt und ragt, da die Leuchteinheit 8^{II} entlang des Eckbereichs vollständig in der Aufnahme 11^{II} aufgenommen ist, nicht gegenüber der Aufnahme 11^{II} in Richtung des Laderaums 7^{II} vor. Ansonsten entsprechen das Aufnahmebauteil 9^{II} und der Aufbau 1^{II} dem Aufnahmebauteil 9^{I} und dem Aufbau 1^{I} gemäß Fig. 3.

In der Fig. 5 ist ein Detail eines Aufbaus 1^{III} im Bereich eines Eckbereichs dargestellt, in dem das Dachpaneel 3^{III} und ein Seitenwandpaneel 4^{III} miteinander verbunden sind. In dem Eckbereich zwischen dem Dachpaneel 3^{III} und dem Seitenwandpaneel 4^{III} bzw. zwischen deren inneren Decklagen 5^{III},13^{III} ist ein Winkelprofil 12^{III} als Aufnahmebauteil 9^{III} für die Leuchteinheit 8^{III} vorgesehen und mit dem Dachpaneel 3^{III} sowie dem Seitenwandpaneel 4^{III} verbunden. Das Aufnahmebauteil 9^{III} in Form eines Winkelprofils 12^{III} trägt ein Zwischenstück 16^{III}, über das eine Leuchteinheit 8^{III} mit dem Aufnahmebauteil 9^{III} verbunden ist. Das Zwischenstück 16^{III} ist der Einfachheit halber über eine Rastverbindung mit dem Aufnahmebauteil 9^{III} verbunden. Zudem weist das Zwischenstück 16^{III} eine dem Laderaum 7^{III} zugewandte Seite auf, in der eine Aufnahme 11^{III} für die Leuchteinheit vorgesehen ist. Diese Aufnahme 11^{III} ist dabei so ausgebildet, dass die Leuchteinheit 8^{III} vollständig in der Aufnahme 11^{III} aufgenommen ist und nicht gegenüber dem Zwischenstück 16^{III} in Richtung des Laderaums 7^{III} vorsteht und zwar insbesondere auch nicht gegenüber den sich an den Längsseiten der Leuchteinheit 8^{III} anschließenden Abschnitten des Zwischenstücks 16^{III}.

Das Zwischenstück 16^{III} weist auf der der Leuchteinheit 8^{III} abgewandten Seite noch zwei weitere Aufnahmen 17^{III} auf, in denen elektrische Kabel 18^{III} aufgenommen sind, ohne gegenüber dem Zwischenstück 16^{III} nach außen vorzustehen. Die Kabel 18^{III} werden formschlüssig in den entsprechenden Aufnahmen 17^{III} gehalten, während die Leuchteinheit 8^{III} mit der entsprechenden Aufnahme 11^{III} verklebt ist. Beides kann im Wege einer Vorkonfektionierung erfolgen, um die Montage des Aufbaus 1^{III} insgesamt zu vereinfachen. Beim dargestellten Aufbau 1^{III} stellt der Eckbereich des Aufnahmebauteils 9^{III} in Form des Winkelprofils 12^{III} die Aufnahme 19^{III} zur Aufnahme des Zwischenstücks 16^{III} dar, das seinerseits die Leuchteinheit 8^{III} in einer an diesen Zweck angepassten Aufnahme 11^{III} aufnimmt. Dabei ist das Zwischenstück 16^{III} derart im Aufnahmebauteil 9^{III} aufgenommen, so dass das Zwischenstück 16^{III} nicht gegenüber dem Aufnahmebauteil 9^{III} in Richtung des Laderaums 7^{III} vorsteht. Dies wird insbesondere durch die Aufnahme 19^{III} des Zwischenstücks 16^{III} im Eckbereich des Winkelprofils 12^{III} erreicht. Seitlich können daher keine Kräfte am Zwischenstück 16^{III} angreifen, die das Zwischenstück 16^{III} vom Aufnahmebauteil 9^{III} in Form des Winkelprofils 12^{III} trennen können.

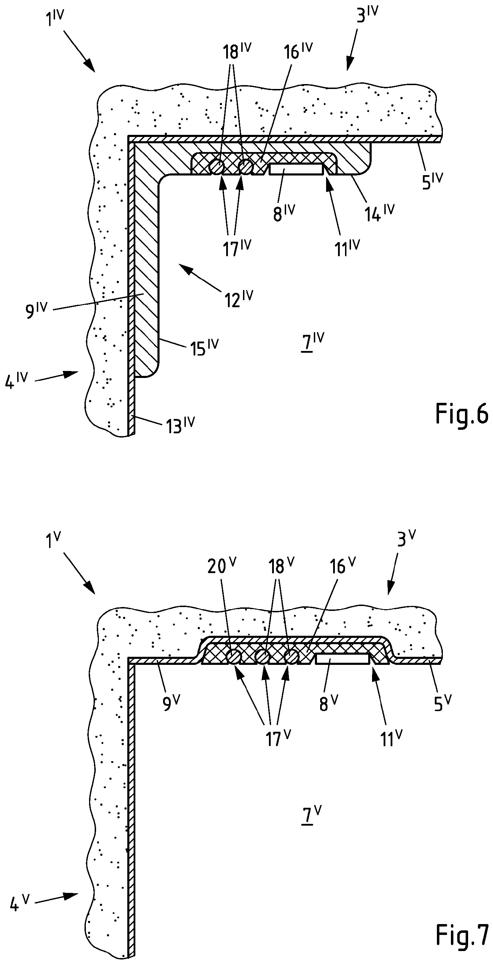

In der Fig. 6 ist ein Aufbau 1^{IV} ähnlich dem Aufbau 1^{III} aus der Fig. 5 mit einem Dachpaneel 3^{IV} und einem Seitenwandpaneel 4^{IV} dargestellt, wobei das Dachpaneel 3^{IV} und das Seitenwandpaneel 4^{IV} einen Eckbereich bilden. In dem Eckbereich ist ein Aufnahmebauteil 9^{IV} in Form eines mit dem Dachpaneel 3^{IV} sowie mit dem Seitenwandpaneel 4^{IV}, insbesondere deren inneren Decklagen 5^{IV},13^{IV}, verbundenen Winkelprofil 12^{IV} vorgesehen. Das Aufnahmebauteil 9^{IV} weist jedoch im Gegensatz zu dem Aufbau 1^{IV} gemäß Fig. 6^{IV} in dem dem Dachpaneel 3^{IV} zugeordneten Schenkel 14^{IV} eine Aufnahme 19^{IV} zur Aufnahme eines Zwischenstücks 16^{IV} auf, die von ihrer Form und Größe korrespondierend mit der Form und Größe des aufzunehmenden Zwischenstücks 16^{IV} ausgebildet ist. Das Zwischenstück 16^{IV} ist in die Aufnahme 19^{IV} eingeklebt. Das Zwischenstück 16^{IV} steht dabei nicht gegenüber dem dem Dachpaneel 3^{IV} zugeordneten Schenkel 14^{IV} in Richtung des Laderaums 7^{IV} vor. Das Zwischenstück 16^{IV} weist zudem ähnlich wie das Zwischenstück 16^{III} gemäß Fig. 5 eine Aufnahme 11^{IV} für die Leuchteinheit 8^{IV} und zwei Aufnahmen 17^{IV} für Kabel 18^{IV} auf. Bei dem Zwischenstück 16^{IV} gemäß Fig. 6 könnte auch eine andere Anzahl an Aufnahmen 11^{IV},17^{IV} vorgesehen sein. Die dargestellten Aufnahmen 11^{IV},17^{IV} weisen mit ihren Öffnungen in Richtung des Laderaums 7^{IV}, was hinsichtlich der Aufnahmen 17^{IV} für die Kabel 18^{IV} nicht zwingend aber reparaturfreundlicher ist. Die Kabel 18^{IV} und die Leuchteinheit 8^{IV} sind in den entsprechenden Aufnahmen 11^{IV},17^{IV} soweit aufgenommen, dass die Kabel 18^{IV} und die Leuchteinheit 8^{IV} gegenüber der jeweiligen Aufnahme 11^{IV},17^{IV} nicht gegenüber dem Zwischenstück 16^{IV} in Richtung des Laderaums 7^{IV} vorstehen.

Der in der Fig. 7 dargestellte Aufbau 1^{V} verzichtet auf ein Winkelprofil. Allerdings ist in dem Dachpaneel 3^{V}, das das Aufnahmebauteil 9^{V} bildet, eine Aufnahme 19^{V} in Form einer Vertiefung 11^{V} oder Sicke vorgesehen, in der ein Zwischenstück 16^{V} aufgenommen ist, und zwar soweit, dass das Zwischenstück 16^{V} nicht gegenüber dem Aufnahmebauteil 9^{V} in Richtung des Laderaums 7^{V} vorsteht. Das Zwischenstück 16^{V} weist ähnlich wie das Zwischenstück 16^{IV} gemäß Fig. 6 mehrere in Richtung des Laderaums 7^{V} offene Aufnahmen 11^{V},17^{V} auf, in denen Kabel 18^{V}, eine Leitung 19^{V} und eine Leuchteinheit 8^{V} aufgenommen sind, und zwar jeweils in einer Weise, dass die Kabel 18^{V}, die Leitung 20^{V} und die Leuchteinheit 8^{V} gegenüber den jeweiligen Aufnahmen 11^{V},17^{V} nicht in Richtung des Laderaums 7^{V} vorstehen. Die Kabel 18^{V}, die Leitung 19^{V} und die Leuchteinheit 8^{V} sind dagegen gerade eben fluchtend zum Zwischenstück 16^{V} und der inneren Decklage 5^{V}, also letztlich fluchtend zum Aufnahmebauteil 9^{V}, in der jeweiligen Aufnahme 11^{V},17^{V} des Zwischenstücks 16^{V} aufgenommen. Zudem ist beim dargestellten Aufbau 1^{V} das Zwischenstück 16^{V} gerade eben fluchtend mit dem Aufnahmebauteil 9^{V} oder anders ausgedrückt mit der inneren Decklage 5^{V} des Aufbaus 1^{V} im Aufnahmebauteil 9^{V} aufgenommen.

Die Leuchteinheiten der vorstehend beschriebenen Ausführungsbeispiele können ganz grundsätzlich vom Laderaum zugänglich sein. Zudem sind die Leuchteinheiten in etwa geradlinig und bandförmig in Längsrichtung des Aufbaus verlegt. Ferner weisen die Leuchteinheiten entlang ihrer Längserstreckung eine Vielzahl von LEDs als Leuchtmittel auf.

## Patentansprüche

1. Aufbau (1^{III}-1^{V}), insbesondere Kofferaufbau, eines Nutzfahrzeugs (N), vorzugsweise eines Lastkraftwagens, Anhängers oder Sattelaufliegers, mit einem darin angeordneten Laderaum (7^{III}-7^{V}) und wenigstens einer Leuchteinheit (8^{III}-8^{V}) zur Beleuchtung des Laderaums(7^{III}-7^{V}), wobei die Leuchteinheit (8^{III}-8^{V}) länglich, insbesondere bandförmig, ausgebildet ist und wenigstens teilweise derart in wenigstens einer Aufnahme (11^{III}-11^{V}) eines den Laderaum (7^{III}-7^{V}) begrenzenden Aufnahmebauteils (9^{III}-9^{V}) aufgenommen ist, dass der in der Aufnahme (11^{III}-11^{V}) aufgenommene Teil der Leuchteinheit (8-8^{V}) nicht gegenüber dem Aufnahmebauteil (9^{III}-9^{V}), insbesondere den an gegenüberliegenden Seiten der Leuchteinheit (8^{III}-8^{V}) vorgesehenen Bereichen des Aufnahmebauteils (9^{III}-9^{V}), in den Laderaum (7^{III}-7^{V}) vorsteht, wobei die wenigstens eine Leuchteinheit (9^{III}-9^{V}) in wenigstens einem Zwischenstück (16^{III}-16^{V}) montiert ist, wobei das Zwischenstück (16^{III}-16^{V}) zusammen mit der Leuchteinheit (8^{III}-8^{V}) wenigstens teilweise in der Aufnahme (11^{III}-11^{V}) des Aufnahmebauteils (9^{III}-9^{V}) aufgenommen ist, wobei das wenigstens eine Zwischenstück (16^{III}-16^{V}) im Aufnahmebauteil (9^{III}-9^{V}) wenigstens teilweise durch eine Rastverbindung und/oder Klebeverbindung gehalten ist und wobei das wenigstens eine Aufnahmebauteil (9^{V}) ein Dachpaneel (3^{V}) und/oder ein Seitenwandpaneel (4^{V}) mit einer an den Laderaum (7^{V}) grenzenden inneren Decklage (5^{V}) und/oder das wenigstens eine Aufnahmebauteil (9^{III},9^{IV}) ein Profil (12^{III},12^{IV}) ist, wobei das Zwischenstück (16^{III}-16^{V}) auf der dem Laderaum (7^{III}-7^{V}) zugewandten Seite der inneren Decklage (5^{III}-5^{V}) des Dachpaneels (3^{III}-3^{V}) und/oder Seitenwandpaneels (4^{III}-4^{V}) angeordnet ist.

2. Aufbau nach Anspruch 1,
**dadurch gekennzeichnet, dass** die wenigstens eine Leuchteinheit (8-8^{V}) mehrere, insbesondere ein Vielzahl Leuchtmittel, vorzugsweise in Form von LEDs, aufweist.

3. Aufbau nach Anspruch 1 oder 2,
**dadurch gekennzeichnet, dass** die wenigstens eine Leuchteinheit (8-8^{V}) vom Laderaum (7-7^{V}) zugänglich ist.

4. Aufbau nach einem der Ansprüche 1 bis 3,
**dadurch gekennzeichnet, dass** die wenigstens eine Aufnahme (11,11^{V}) eine in das Dachpaneel (3,3^{V}) und/oder das Seitenwandpaneel, insbesondere eine an den Laderaum (7,7^{V}) grenzenden inneren Decklage (5,5^{V},) des Dachpaneels (3,3^{V}) und/oder des Seitenwandpaneels, eingebrachte Vertiefung und/oder Sicke ist.

5. Aufbau nach einem der Ansprüche 1 bis 4,
**dadurch gekennzeichnet, dass** das wenigstens eine Aufnahmebauteil (9^{I}-9^{IV}) ein im Deckenbereich des Laderaums (7^{I}-7^{IV}) vorgesehenes Profil (12^{I}-12^{IV}) ist.

6. Aufbau nach einem der Ansprüche 1 bis 5,
**dadurch gekennzeichnet, dass** das das wenigstens eine Profil (12^{I}-12^{IV}) das Dachpaneel (3^{I}-3^{IV}) und ein Seitenwandpaneel (4^{I}-4^{IV}) miteinander verbindet und dass, vorzugsweise, das Profil (12^{I}-12^{IV}) ein Winkelprofil ist.

7. Aufbau nach einem der Ansprüche 1 bis 6,
**dadurch gekennzeichnet, dass** das wenigstens eine Zwischenstück (16^{III}-16^{V}) derart in der Aufnahme (19^{III}-19^{V}) des wenigstens einen Aufnahmebauteils (9^{III}-9^{V}) aufgenommen ist, dass das Zwischenstück (16^{III}-16^{V}) nicht gegenüber dem Aufnahmebauteil (9^{III}-9^{V}), insbesondere den an gegenüberliegenden Seiten des Zwischenstücks (16^{III}-16^{V}) vorgesehenen Bereichen des Aufnahmebauteils (9^{III}-9^{V}), in den Laderaum (7^{III}-7^{V}) vorsteht.

8. Aufbau nach einem der Ansprüche 1 bis 7,
**dadurch gekennzeichnet, dass** die wenigstens eine Leuchteinheit (8^{III}-8^{V}) derart in der Aufnahme (11^{III}-11^{V}) des wenigstens einen Zwischenstücks (16^{III}-16^{V}) aufgenommen ist, dass die Leuchteinheit (8^{III}-8^{V}) nicht gegenüber der Aufnahme (11^{III}-11^{V}) des Zwischenstücks (16^{III}-16^{V}), insbesondere gegenüber den an gegenüberliegenden Seiten der Leuchteinheit (8^{III}-8^{V}) angrenzenden Bereichen des Zwischenstücks (16^{III}-16^{V}), in den Laderaum (7^{III}-7^{V}) vorsteht.

9. Aufbau nach einem der Ansprüche 1 bis 8,
**dadurch gekennzeichnet, dass** das wenigstens eine Zwischenstück (16^{III}-16^{V}) wenigstens eine Aufnahme (11^{III}-11^{V}) für die wenigstens eine Leuchteinheit (8^{III}-8^{V}) und wenigstens eine Aufnahme für wenigstens ein Kabel (17^{III}-17^{V}) und/oder wenigstens eine Leitung (20^{V}) aufweist.

10. Aufbau nach einem der Ansprüche 1 bis 9,
**dadurch gekennzeichnet, dass** die wenigstens eine Leuchteinheit (8-8^{V}) im Zwischenstück (16^{III}-16^{V}) oder im Aufnahmebauteil (9-9^{V}) wenigstens teilweise durch eine Rastverbindung und/oder Klebeverbindung gehalten ist.

11. Aufbau nach einem der Ansprüche 1 bis 10,
**dadurch gekennzeichnet, dass** die wenigstens eine Leuchteinheit (8) und/oder das wenigstens eine Zwischenstück (16^{V})am Dachpaneel (3,3^{V}) vorgesehen ist.

12. Aufbau nach einem der Ansprüche 1 bis 11,
**dadurch gekennzeichnet, dass** die wenigstens eine Leuchteinheit (8^{I}-8^{V}) und/oder das wenigstens eine Zwischenstück (16^{III}-16^{V}) in einem durch die Verbindung von wenigstens einem Seitenwandpaneel (4^{I}-4^{V}) und dem Dachpaneel (3^{I}-3^{V}) gebildeten Eckbereich vorgesehen ist.

## Claims

1. Body (1^{III}*-*1^{V}), in particular box body, of a commercial vehicle (N), preferably a truck, trailer or semi-trailer, with a loading space (7^{III}-7^{V}) arranged therein and at least one lighting unit (8^{III}-8^{V}) for illuminating the loading space (7^{III}-7^{V}), wherein the lighting unit (8^{III}-8^{V}) is elongated shaped, in particular strip-shaped, and is at least partially received in at least one receptacle (11^{III}-11^{V}) of an receiving component (9^{III}-9^{V}) limiting the loading space (7^{III}-7^{V}), in that the part of the lighting unit (8-8^{V}) received in the receptacle (11^{III}-11^{V}) is not protruding with respect to the receptacle component (9^{III}-9^{V}), in particular to the regions of the receptacle component (9^{III}-9^{V}) provided on opposite sides of the lighting unit (8^{III}-8^{V}), into the loading space (7^{III}-7^{V}) wherein the at least one lighting unit (9^{III}-9^{V}) is mounted in at least one intermediate piece (16^{III}-16^{V}), wherein the intermediate piece (16^{III}-16^{V}) together with the lighting unit (8^{III}-8^{V}) is at least partially received in the receptacle (11^{III}-11^{V}) of the receiving component (9^{III}-9^{V}), wherein the at least one intermediate piece (16^{III}-16^{V}) is held in the receiving component (9^{III}-9^{V}) at least partially by a snap-in connection and/or adhesive connection and wherein the at least one receiving component (9^{V}) comprises a roof panel (3^{V}) and/or a side wall panel (4^{V}) with an inner cover layer (5^{V}) adjoining the loading space (7^{V}) and/or the at least one receiving component (9^{III} ,9^{IV}) is a profile (12^{III} ,12^{IV}), wherein the intermediate piece (16^{III}-16^{V}) is arranged on the side of the inner cover layer (5^{III}-5^{V}) of the roof panel (3^{III}-3^{V}) and/or side wall panel (4^{III}-4^{V}) facing the loading space (7^{III}-7^{V}).

2. Body according to claim 1,
**characterized in that**
the at least one lighting unit (8-8^{V}) has a plurality, in particular a multiplicity, of light sources, preferably in the form of LEDs.

3. Body according to claim 1 or 2,
**characterized in that**
the at least one lighting unit (8-8^{V}) is accessible from the loading space (7-7^{V}).

4. Body according to any one of claims 1 to 3,
**characterized in that**
the at least one receptacle (11,11^{V}) is a recess and/or bead made in the roof panel (3,3^{V}) and/or the side wall panel, in particular an inner cover layer (5,5^{V}) of the roof panel (3,3^{V}) and/or of the side wall panel adjoining the loading space (7,7^{V}).

5. Body according to any one of claims 1 to 4,
**characterized in that**
the at least one receiving component (9^{I}-9^{IV}) is a profile (12^{I}-12^{IV}) provided in the ceiling region of the loading space (7^{I}-7^{IV}).

6. Body according to any one of claims 1 to 5,
**characterized in that**
the at least one profile (12^{I}-12^{IV}) connects the roof panel (3^{I}-3^{IV}) and a side wall panel (4^{I}-4^{IV}) to each other and that, preferably, the profile (12^{I}-12^{IV}) is an angle profile.

7. Body according to any one of claims 1 to 6,
**characterized in that**
the at least one intermediate piece (16^{III}-16^{V}) is received in the receptacle (19^{III}-19^{V}) of the at least one receiving component (9^{III}-9^{V}) in such a way that the intermediate piece (16^{III}-16^{V}) is not protruding with respect to the receiving component (9^{III}-9^{V}), in particular the regions of the receiving component (9^{III}-9^{V}) provided on opposite sides of the intermediate piece (16^{III}-16^{V}), into the loading space (7^{III}-7^{V}).

8. Body according to any one of claims 1 to 7,
**characterized in that**
the at least one lighting unit (8^{III}-8^{V}) is received in the receptacle (11^{III}-11^{V}) of the at least one intermediate piece (16^{III}-16^{V}) in such a way that the lighting unit (8^{III}-8^{V}) is not protruding with respect the receptacle (11^{III}-11^{V}) of the intermediate piece (16^{III}-16^{V}), in particular with respect to the regions of the intermediate piece (16^{III}-16^{V}) adjoining on opposite sides of the lighting unit (8^{III}-8^{V}), into the loading space (7^{III}-7^{V}).

9. Body according to any one of claims 1 to 8,
**characterized in that**
the at least one intermediate piece (16^{III}-16^{V}) has at least one receptacle (11^{III}-11^{V}) for the at least one lighting unit (8^{III}-8^{V}) and at least one receptacle for at least one cable (17^{III}-17^{V}) and/or at least one line (20^{V}).

10. Body according to any one of claims 1 to 9,
**characterized in that**
the at least one lighting unit (8-8^{V}) is held in the intermediate piece (16^{III}-16^{V}) or in the receiving component (9-9^{V}) at least partially by a snap-in connection and/or adhesive connection.

11. Body according to any one of claims 1 to 10,
**characterized in that**
the at least one lighting unit (8) and/or the at least one intermediate piece (16^{V}) is provided on the roof panel (3,3^{V}).

12. Body according to any one of claims 1 to 11,
**characterized in that**
the at least one lighting unit (8^{I}-8^{V}) and/or the at least one intermediate piece (16^{III}-16^{V}) is provided in a corner region formed by the connection of at least one side wall panel (4^{I}-4^{V}) and the roof panel (3^{I}-3^{V}).

## Revendications

1. Structure (1^{III} -1^{V}), en particulier structure de coffre, d'un véhicule utilitaire (N), de préférence d'un camion, d'une remorque ou d'une semi-remorque, avec un espace de chargement (7^{III}-7 ^{V}) disposé dans celui-ci et au moins une unité d'éclairage (8^{III}-8^{V}) pour éclairer l'espace de chargement (7^{III}-7^{V}), l'unité d'éclairage (8^{III}-8^{V}) étant allongée, en particulier en forme de bande, et est logée au moins partiellement dans au moins un logement (11^{III} -11^{V}) d'un élément de réception (9^{III}-9^{V}) délimitant l'espace de chargement (7^{III}-7^{V}), en ce que la partie de l'unité d'éclairage (8-8^{V}) logée dans le logement (11^{III} -11^{V}) ne dépasse pas en face de l'élément de réception (9^{III}-9^{V}), en particulier les zones de l'élément de réception (9^{III}-9^{V}) prévues sur les côtés opposés de l'unité d'éclairage (8^{III}-8^{V}), dans l'espace de chargement (7^{III}-7^{V}), ladite au moins une unité d'éclairage (9^{III}-9^{V}) étant montée dans au moins une pièce intermédiaire (16^{III}-16^{V}), ladite pièce intermédiaire (16^{III}-16^{V}) étant logée, avec l'unité d'éclairage (8^{III}-8^{V}), au moins partiellement dans le logement (11^{III} -11^{V}) de l'élément de réception (9^{III}-9^{V}), ladite au moins une pièce intermédiaire (16^{III}-16^{V}) est maintenu dans l'élément de réception (9^{III} -9^{V}) au moins en partie par un assemblage par encliquetage et/ou par collage, et dans lequel l'au moins un élément de réception (9^{V}) est un panneau de toit (3^{V}) et/ou un panneau de paroi latérale (4^{V}) avec une couche de couverture intérieure (5^{V}) adjacente à l'espace de chargement (7^{V}) et/ou l'au moins un élément de réception (9^{III} ,9^{IV}) est un profilé (12^{III} ,12 ^{IV}), dans lequel la pièce intermédiaire (16^{III}-16^{V}) est disposée sur le côté, tourné vers l'espace de chargement (7^{III}-7^{V}), de la couche de couverture intérieure (5^{III}-5^{V}) du panneau de toit (3^{III}-3^{V}) et/ou du panneau de paroi latérale (4^{III} -4^{V}).

2. Structure selon la revendication 1,
**caractérisé en ce que**
l'au moins une unité d'éclairage (8-8^{V}) présente plusieurs, en particulier une pluralité de moyens d'éclairage, de préférence sous forme de LED.

3. Structure selon la revendication 1 ou 2,
**caractérisé en ce que**
la au moins une unité d'éclairage (8-8^{V}) est accessible depuis l'espace de chargement (7-7^{V}).

4. Structure selon l'une quelconque des revendications 1 à 3,
**caractérisé en ce que**
le au moins un logement (11, 11^{V}) est un renfoncement et/ou une moulure ménagée dans le panneau de toit (3, 3^{V}) et/ou le panneau de paroi latérale, en particulier une couche de couverture intérieure (5, 5^{V}) du panneau de toit (3, 3^{V}) et/ou du panneau de paroi latérale, adjacente à l'espace de chargement (7, 7^{V}).

5. Structure selon l'une quelconque des revendications 1 à 4,
**caractérisé en ce que**
le au moins un élément de réception (9^{I} -9^{IV}) est un profilé (12^{I} -12^{IV}) prévu dans la zone de plafond de l'espace de chargement (7^{I} -7^{IV}).

6. Structure selon l'une quelconque des revendications 1 à 5,
**caractérisé en ce que**
le au moins un profilé (12^{I} -12^{IV}) relie le panneau de toit (3^{I} -3^{IV}) et un panneau de paroi latérale (4^{I} -4^{IV}) et que, de préférence, le profilé (12^{I} -12^{IV}) est un profilé angulaire.

7. Structure selon l'une quelconque des revendications 1 à 6,
**caractérisé en ce que**
la au moins une pièce intermédiaire (16^{III}-16^{V}) est logée dans le logement (19^{III} - 19^{V}) du au moins un élément de réception (9^{III}-9^{V}) de telle sorte que la pièce intermédiaire (16^{III}-16^{V}) ne dépasse pas en face de l'élément de réception (9^{III}-9^{V}), notamment les zones de l'élément de réception (9^{III}-9^{V}) prévues sur les côtés opposés de la pièce intermédiaire (16^{III}-16^{V}), dans l'espace de chargement (7^{III}-7V).

8. Structure selon l'une quelconque des revendications 1 à 7,
**caractérisé en ce que**
l'au moins une unité d'éclairage (8^{III}-8^{V}) est logée dans le logement (11^{III} -11^{V}) de l'au moins une pièce intermédiaire (16^{III}-16^{V}) de telle sorte que l'unité d'éclairage (8^{III}-8^{V}) ne dépasse pas en face du logement (11^{III} -11^{V}) de la pièce intermédiaire (16^{III}-16^{V}), notamment par rapport aux zones de la pièce intermédiaire (16^{III}-16^{V}) adjacentes aux côtés opposés de l'unité d'éclairage (8^{III}-8^{V}), dans l'espace de chargement (7^{III}-7^{V}).

9. Structure selon l'une quelconque des revendications 1 à 8,
**caractérisé en ce que**
la au moins une pièce intermédiaire (16^{III}-16^{V}) présente au moins un logement (11^{III}-11^{V}) pour la au moins une unité d'éclairage (8^{III}-8^{V}) et au moins un logement pour au moins un câble (17^{III}-17^{V}) et/ou au moins une conduite (20^{V}).

10. Structure selon l'une quelconque des revendications 1 à 9,
**caractérisé en ce que**
la au moins une unité d'éclairage (8-8^{V}) est maintenue dans la pièce intermédiaire (16^{III}-16^{V}) ou dans l'élément de réception (9-9^{V}) au moins partiellement par un assemblage par encliquetage et/ou par collage.

11. Structure selon l'une quelconque des revendications 1 à 10,
**caractérisé en ce que**
l'au moins une unité d'éclairage (8) et/ou l'au moins une pièce intermédiaire (16^{V}) est prévue sur le panneau de toit (3, 3^{V}).

12. Structure selon l'une quelconque des revendications 1 à 11,
**caractérisé en ce que**
l'au moins une unité d'éclairage (8^{I} -8^{V}) et/ou l'au moins une pièce intermédiaire (16^{III}-16^{V}) est prévue dans une zone d'angle formée par la liaison d'au moins un panneau de paroi latérale (4^{I} -4^{IV}) et le panneau de toit (3^{I} -3^{V}).
